# EUROPEAN PATENT SPECIFICATION

(11) **EP 3 209 495 B1**
(45) Date of publication and mention of the grant of the patent: **06.05.2020**
(21) Application number: 15784100.8
(22) Date of filing: 12.10.2015
(51) Int. Cl.: B32B 5/02, B32B 5/06, B32B 5/18, B32B 5/24, B32B 5/26, B32B 7/02, B32B 3/12

(54) **LAMINATED COMPOSITE MATERIAL AND METHOD FOR MANUFACTURING LAMINATED COMPOSITE MATERIAL**
LAMINIERTES VERBUNDMATERIAL UND VERFAHREN ZUR HERSTELLUNG EINES LAMINIERTEN VERBUNDMATERIALS
MATÉRIAU COMPOSITE STRATIFIÉ ET PROCÉDÉ DE FABRICATION D'UN MATÉRIAU COMPOSITE STRATIFIÉ

(30) Priority: 21.10.2014 GB 201418717; 04.12.2014 GB 201421600
(43) Date of publication of application: 30.08.2017
(73) Proprietor: Eco-Technilin SAS, 76190 Valliquerville (FR)
(72) Inventor: SWEATMAN, Timothy John, Brampton PE28 4YQ (GB); SPINNEY, Douglas Montague, Hemingford Grey PE28 9DF (GB)
(74) Representative: Cabinet Bleger-Rhein-Poupon
(86) International application number: PCT/GB2015/052989
(87) International publication number: WO 2016/063011

(56) References cited:
- WO-A1-2012/049457
- WO-A1-2012/101192
- WO-A1-2013/064859
- FR-A1- 2 349 353
- US-A1- 2007 004 307
- US-A1- 2007 269 645
- US-A1- 2010 297 414

## Description

### BACKGROUND TO THE INVENTION

### Field of the invention

The present invention relates to a laminated composite material and methods for manufacturing a laminated composite material. Such materials are of interest for load bearing applications.

### Related art

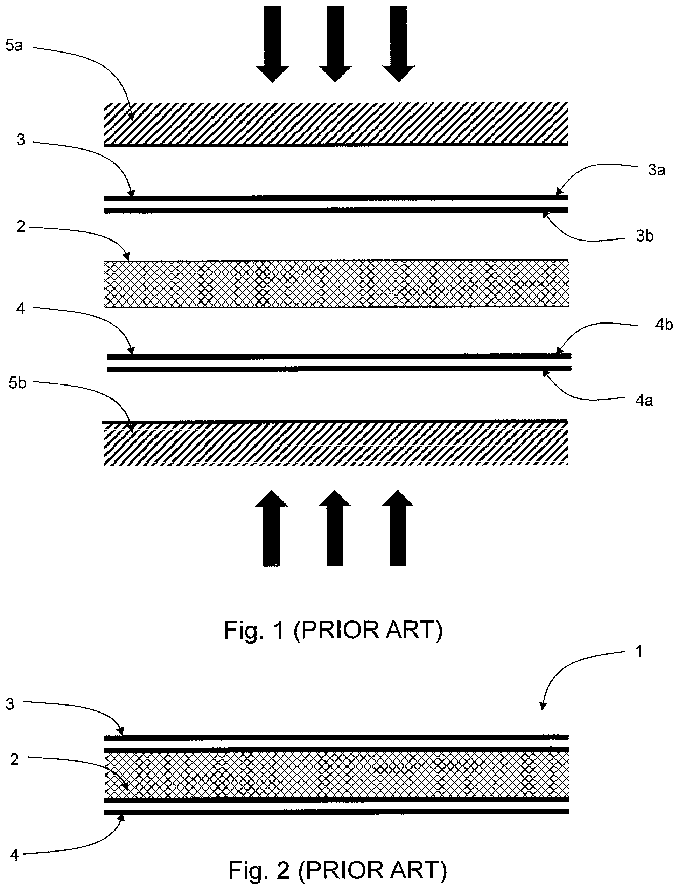

WO 2012/056202 discloses composite load bearing panels, resin-impregnated fibre mats and methods for their manufacture. Figs. 1 and 2 schematically illustrate a composite load bearing panel according to WO 2012/056202. Fig. 1 shows the separated components of the panel 1 during manufacture, and the mould surfaces 5a, 5b used to press them together. Fig. 2 shows the assembled panel 1. The panel 1 has a sandwich construction with a paper or card cellular core 2 and upper and lower skin layers 3, 4. Each skin layer in the assembled panel 1 comprises natural fibre and cured bio-resin. These are each formed using a natural fibre mat with bio-resin applied. Each skin layer 3, 4 has a first face 3a, 4a and a second face 3b, 4b, the first face 3a, 4a having applied a first bio-resin, the second face 3b, 4b having applied a second bio-resin. The second face 3b, 4b for each skin layer 3, 4 is in contact with and bonded to the core 2. The second bio-resin differs from the first bio-resin in terms of composition, quantity, curing temperature, curing speed, viscosity and/or water content.

It is also known in the art to produce sandwich panels using flax-fibre composites, as in Khalfallah et al "Flax/Acrodur® sandwich panel: an innovative ecomaterial for automotive applications", (JEC Composites Magazine / No. 89, May 2014). The sandwich panels have three layers of flax fibre reinforcement impregnated with Acrodur® thermoset polyester acrylic resin, the three layers being stacked in a direction suitable for the envisaged applied stresses. Cardboard honeycombs are placed between the skins. In the production of the flax fibres, the bundles forming the flax stems are decorticated and separated, then the remaining shives and woody core of the stem are removed by scutching. The scutched flax is then hackled to obtain long flax fibres. These bundles are then stretched and maintained in a unidirection direction and sprayed with a water mist to promote cohesion of the fibres. The fibres are then dried in an oven and are subsequently impregnated with the Acrodur® resin.

WO 2013/064859 discloses a multilayer composite material comprising a central element arranged between a first and a second reinforcement layer, said central element comprising first and a second structural layer each comprising at least one mat of needle punched fibres of the thermoplastic and/or natural type or a mat of an expanded thermoplastic polymer, said structural layers being impregnated with a thermosetting resin; a third reinforcement layer arranged between said two structural layers , said first, second and third reinforcement layer consisting of a fibrous material, comprising one or more types of fibres selected from the group consisting of glass fibres, natural fibres, carbon fibres, basalt fibres, kevlar fibres, aramid fibres or a mixture of such fibres. Composite materials are known having cellular core layers with skin layers bonded at opposing faces, for stiffness. Cellular core layers formed of aluminium foil are known. Skin layers may include inorganic fibre reinforced plastics, such as glass fibre reinforced plastics or carbon fibre reinforced plastics. The skin layers are typically bonded to the cellular core layers using a separate adhesive layer. Such composite materials are known, for example, for aerospace applications. Suitable known adhesive layers for use in these composite materials include epoxy or BMI bis-maleimide (produced by the condensation reaction of a diamine with maleic anhydride) adhesives. Suitable adhesives are known, for example, from Hexcel with their Redux products ( http://www.hexcel.com/Resources/SelectorGuides/Redux SelectorGuide.pdf). Some suitable adhesives have an expanding, foaming action to link with the walls of a honeycomb core of the composite. Alternative adhesive layers are known from Gurit (http://www.gurit.com/adhesive-films.aspx).

### SUMMARY OF THE INVENTION

The present inventors have realised that further developments of sustainably-sourced fibre and/or resin materials can provide unexpectedly good performance for laminated composite materials. Of particular interest are new materials which provide satisfactory mechanical performance in combination with low area weight, fast curing times and good fire resistance. However, such materials are not commercially available at the time of writing.
The present invention has been devised in order to address at least one of the above problems. Preferably, the present invention reduces, ameliorates, avoids or overcomes at least one of the above problems.
Accordingly, in a first preferred aspect, the present invention provides a laminated composite material according to claim 1.

In a second preferred aspect, the present invention provides a method for manufacturing a laminated composite material according to claim 9.Further embodiments are defined by the dependent claims.

In some preferred embodiments, there is provided a second skin layer. This preferably comprises a network of inorganic fibres, for example being of similar composition and construction to the first skin layer. In these preferred embodiments, the second skin layer is bonded to the first core layer via the resin-based binder component at an opposing side to the first skin layer in a sandwich arrangement.

Preferably, the laminated composite material according to these other preferred embodiments further comprises a third core layer comprising a network of natural fibres at least partially impregnated with a resin-based binder component. Additionally, there may be provided a second skin layer comprising a network of inorganic fibres, for example being of similar composition and construction to the first skin layer. Preferably, the third core layer is bonded to the second core layer via the resin-based binder component at an opposing side to the first core layer, and the second skin layer is bonded to the third core layer via the resin-based binder component at an opposing side to the second core layer. Thus, the preferred structure is: first skin layer (inorganic fibre) - first core layer (natural fibre) - second core layer (low density) - third core layer (natural fibre) - second skin layer (inorganic fibre).

The inorganic fibres of the first and/or second skin layer may be in nonwoven fabric form. However, it is more preferable that they are in the form of woven fabric. Woven fabric tend to have more predictable mechanical properties because the orientation of the fibres is known.

The inorganic fibres of the first and second skin layer may be both mineral fibres. Suitable fibres include glass fibres such as e-glass fibres, carbon fibre or fibre based on naturally-sourced minerals. Suitable naturally-sourced mineral fibres are basalt fibres, for example. Basalt (or other rock-based) fibres are of interest in view of their low environmental impact. Basalt fibres are typically formed by crushing quarried or mined basalt, washing the crushed basalt and heating to a melting temperature (about 1400°C in the case of basalt). The molten rock is then extruded through fine nozzles to form filaments of basalt fibre. Such fibres are considered to have superior mechanical properties compared with regular glass fibres, and yet be considerably cheaper and more environmentally friendly to produce than advanced glass and carbon fibres. Further detailed information relating to the use of mineral fibres in composite materials is set out in "Continuous mineral fibre - a reinforcing element for composites" by V. Gorobinskay, I. Kravtchenko and L. Zabava, paper 1163 of the 12th conference of the ICCM (International Committee on Composite Materials) in Paris in 1999.

Preferably, the inorganic fibres of the first and/or second skin layer satisfy one or more of the following properties:
Density: 2.4-2.9 g/cm³
Tensile strength: 4-5 GPa
Elastic modulus: 90-120 GPa
Preferably, before bonding, the first and/or second skin layer has a smaller thickness than the first and/or third core layer. Before bonding, the thickness of the first and/or second skin layer is preferably at least 0.1mm thick. The thickness of the first and/or second skin layer is preferably at most 2mm thick. The thickness of the first and/or third core layer is preferably at least 2mm thick. The thickness of the first and/or third core layer is preferably at most 10mm thick, more preferably at most 5mm thick.
Similarly, after bonding, the first and/or second skin layer has a smaller thickness than the first and/or third core layer. In the pressing and heating step, the inorganic skin layer is compressed slightly. The natural fibre mat layer is typically compressed more. If present, it is preferred that the low density core is not substantially permanently compressed. This, after bonding, the thickness of the first and/or second skin layer is preferably at least 0.05mm thick. The thickness of the first and/or second skin layer is preferably at most 1.5mm thick. The thickness of the first and/or third core layer is preferably at least 0.5mm thick, on average, subject to the comments below. The thickness of the first and/or third core layer is preferably at most 3mm thick, more preferably at most 1.5mm thick. However, note that where a cellular core is used such as a honeycomb core with walls extending in the thickness direction of the composite, the honeycomb walls typically crush the natural fibres where the walls meet the natural fibre mat. Therefore the thickness of the first and/or third core layer may not be uniform, being smaller (e.g. down to about 0.1mm thick) at the intersection with the walls of the honeycomb core than elsewhere.

The second core layer preferably has a greater thickness than the first skin layer. Similarly, the second core layer preferably has a greater thickness than the first core layer. In preferred embodiments, the second core layer has a thickness which is greater than the combined thickness of the first and second skin layer and the first and second core layers. The second core layer may for example have a thickness in the range 3-60mm, more preferably 3-30mm.
Preferably, therefore, the first core layer acts in part as an adhesive sheet, to bond the first skin layer either to the second skin layer or to the second core layer. The present inventors have found that this is a surprisingly convenient way to bond inorganic fibre skin layers with core layers.
In order to further improve fire resistance properties, one or more components of the composite material may be treated with a fire retardant. This can have the effect of reducing flame spread, smoke formation and/or heat output during combustion. The fire retardant treatment may be applied to the inorganic fibre skin, the natural fibre core and/or the low density core layer.
Suitable products to be used in fire retardant treatments are known and are disclosed for example in:
- Flame retardants for plastics and textiles, Weil et al, Hanser Publications, ISBN 987-1-56990-454-1
- Chemical finishing of textiles, Schindler et al, CRC press and Woodhead publishing, ISBN 987-0-8493-2825-1
Suitable fire retardants may be selected from the group consisting of:
metal hydroxides (endothermic additives such as: alumina trihydrate, magnesium hydroxide);
borates (borate salts such as: ammonium borate, zinc borate, sodium borate, barium borate);
halogenated flame retardants (brominated or chlorinated additives);
antimony trioxide;
phosphorous additives (organic and inorganic phosphates as salts or esters, alkylphosphinates, hypophosphite salts);
expandable graphite;
molybdenum compounds;
melamine cyanurate.

Renewable thermosetting resins are used, such as epoxydized plant oil resins, cashew oil resins or furan-based resins, for environmental reasons. Most preferably, a furan resin comprising a polyfurfuryl alcohol (PFA) polymer and an acid catalyst is used. Preferably, the acid catalyst is paratoluene sulphonic acid.

It is preferable that the resin-based binder component acts to bond the first skin layer and the first core layer. However, it is possible (and preferred) for the resin-based binder component to be provided only in the first core layer. The first core layer can be pre-impregnated with the resin-based binder in a convenient manner, in the components which are subsequently brought together to form the composite. This also allows the first core layer to be bonded to the second core layer using the resin-based binder component originating in the first core layer.
The natural fibres of the first core layer preferably comprise carded fibres. Suitable fibres may be cross-lapped. Carded and cross-lapped fibres may then be needle punched in order to form a fibre mat.
Natural fibres have in their elementary form high specific strength and stiffness like mineral fibres. The natural fibres of the fibrous material component are preferably at least partially aligned, to provide additional stiffness for the composite. Flax or hemp are used as the natural fibre.

The second core layer is a cellular layer having a honeycomb structure comprising a plurality of substantially parallel hollow channels. The cellular layer may be made of a cellulosic material such as paper or card. However, synthetic materials can be used, including polymeric materials such as aromatic polyamides (aramid or meta-aramid). A honeycomb structure is provided with several air spaces, which give the structure a low density, while maintaining mechanical strength. The structure is particularly resilient to compression in a direction substantially parallel to the substantially parallel hollow channels, and also particularly resilient against flexure in directions which attempt to bend the channels. Provision of a cellular layer can provide a suitably low density and is advantageous in terms of its use of natural materials.

The resin component is preferably capable of forming a bonding bridge between the second core layer and the first and/or third core layers.
The fibre mat, to be used as the first and/or third core layer is at least partially impregnated with resin. This impregnation is preferably done before the arrangement of the other layers with the first and/or third core layer into a stack suitable for heating and pressing to form the laminated composite.
In the method of the second aspect, the heating and pressing may be carried out by opposed pressing surfaces of a forming tool. The forming tool may have different shapes depending on the overall shape of the composite required. Furthermore one or both of the opposed pressing surfaces may move during the pressing and heating step.
Preferably, a first resin is provided at a first face (A face) of the natural fibre mat and a second resin is provided at a second face (B face) of the natural fibre mat. The second resin may differ from the first resin in terms of composition, quantity, curing temperature, curing speed, viscosity and/or water content. This is advantageous since the two faces of the mat typically must perform different tasks, as discussed in WO 2012/056202.
Preferably, the second resin differs from the first resin at least in that the second resin cures faster and/or at a lower temperature than the first resin.

Preferably, for each natural fibre mat, the second face (B face) of the impregnated natural fibre mat is for contact with the second core layer (low density layer). In the method of manufacture of the present invention, there is preferably formed a wet sandwich construction which is pressed and heated so as to compress (at least in part) the impregnated natural fibre mat and cure the first and second resins.
The application of the resin to the respective faces of the natural fibre mat may be achieved through different processes. For example one face may be contact coated, e.g. using a roller coating process. The other side may be sprayed or applied with a blade coater. Alternative coating processes include sprinkling, painting, dipping, and full bath impregnation. The purpose of using different application processes relates to the different resins having different physical properties (e.g. different viscosity) and so the different resins are most efficiently applied to the mat using different application processes. Furthermore, the different application processes allow different quantities of resin to be applied to each face.

The characteristics of the final product can be varied considerably according to need by varying the distribution of the resin through the natural fibre mat, its thickness and the pressure applied.

The process of impregnation of the resin into the natural fibre mat can be in the form of a continuous process. In that case, the width of the mat is limited only by the width of the coating machinery. Furthermore, the manufacture of the composite itself (including the pressing and curing step) can be part of the continuous process. The resulting sheet of composite material may then be guillotined to size as it emerges from the production machinery. Alternatively, the resin-impregnated natural fibre mat can be used as a prepreg, the prepreg being cut to length as desired, applied to the core and then pressed and cured in a static press.

The thickness of the second core layer is preferably at least 3mm or at least 5mm. The thickness of the first skin layer is preferably at least 5 times smaller than the thickness of the second core layer. Similarly, the thickness of the first core layer (in the final product) is preferably at least 5 times smaller than the thickness of the second core layer.

For the first and/or third core layer, the natural fibres are preferably arranged substantially randomly but substantially parallel to each face of the skin layer. The natural fibres may have an average length of at least 10mm, more preferably at least 20mm, at least 30mm, at least 40mm, at least 50mm, at least 60mm or at least 70mm. The fibres may be processed (e.g. cut) to have a maximum length of up to 150mm, for example. The fibres may have a length which is longer (preferably substantially longer, e.g. at least 10 times longer) than the thickness of the first and/or third core layer.

Preferably, the natural fibres are plant-derived fibres. Preferably, the plant-derived fibres are one or more selected from the following: hemp, jute, flax, ramie, kenaf, rattan, soya bean fibre, okra fibre, cotton, vine fibre, peat fibre, kapok fibre, sisal fibre, banana fibre or other similar types of bast fibre material. Such fibres are considered to be annually renewable, in that they are based on a crop which can be grown, harvested and renewed annually.

Preferably, the natural fibre mat is a non-woven mat formed by needle punching. Alternatively, air laying may be used. Non-woven mats are preferred. However, woven mats may be used. The area density of the natural fibre mat may be in the range 300-3000 grams per square metre (gsm).

Preferably, the natural fibre mat is dried before use in the process. A natural fibre mat with moisture content of less than 5wt% is suitable, e.g. about 3wt%.

The curing process for the composite includes heating. The heating step typically heats the structure to a temperature of at least 130°C. Preferably, in this step, the structure is heated to a temperature of 250°C or lower, more preferably 200°C or lower. A typical temperature for this heating step is 150-190°C.

The curing process for the panel also includes pressing. By the combination of heating and pressing, at least part of the impregnated natural fibre mat is typically permanently compressed so that the density of the first and/or third core layer after heating and pressing is at least three times (preferably at least four times or at least five times) the density of the impregnated natural fibre mat before heating and pressing. This may apply particularly to the A face of the natural fibre mat, but for the reasons explained in more detail below may not apply to the B face of the natural fibre mat.

The bio-resin may be derived from sugar cane. One example of a "bio-resin" is a furan resin, although other bio-resins are available. Preferably, the bio-resin comprises furfural (furan-2-carbaldehyde) or a derivative of furfural such as furfuryl alcohol. Furan resins are typically made by self polymerisation of furfuryl alcohol and/or furfural. Alternatively, suitable resins can be made by copolymerisation of furfuryl alcohol and/or furfural with another resin (e.g. a thermosetting resin) or its monomers. Examples of the latter are furfuryl alcohol - urea formaldehyde and furfuryl alcohol - phenolic blends. In a preferred embodiment, the resin may therefore be a polyfurfuryl alcohol, a liquid polymer which self-crosslinks in the presence of an acid catalyst.

For example, a furan resin may be produced in which furfural replaces formaldehyde in a conventional production of a phenolic resin. The furan resin cross links (cures) in the presence of a strong acid catalyst via condensation reactions. Furfural is an aromatic aldehyde, and is derived from pentose (C5) sugars, and is obtainable from a variety of agricultural byproducts. It is typically synthesized by the acid hydrolysis and steam distillation of agricultural byproducts such as corn cobs, rice hulls, oat hulls and sugar cane bagasse. Further details relating to furan resins whose use is contemplated in the present invention is set out in "Handbook of Thermoset Plastics", edited by Sidney H. Goodman, Edition 2, Published by William Andrew, 1998, ISBN 0815514212, 9780815514213, Chapter 3: Amino and Furan Resins, by Christopher C. Ibeh, the content of which is incorporated herein by reference in its entirety. Furan resins are of particular interest because they are derived from natural, renewable sources, they bond well to natural fibres and they have good flame-retardancy properties.

The bio-resin preferably includes an acid catalyst. The catalyst promotes curing via condensation reactions, releasing water vapour. The bio-resin may further include a blocker component. The function of the blocker component is to affect the curing behaviour of the bio-resin. Thus, the first and second bio-resins may differ in composition, based on the content and/or type of catalyst and/or the content and/or type of blocker component. This allows the second bio-resin to cure faster and/or at a lower temperature than the first bio-resin component.

The present inventors have previously realised in particular that if the bio-resins applied to opposing faces of the natural fibre mat are identical, then during the curing step in which the wet sandwich is heated and pressed, the bio-resin at the first face of the natural fibre mat will cure first, in view of the temperature gradient across the wet sandwich. However, the cured bio-resin can form a thermal barrier, thus reducing the flow of heat to the second face of the mat for curing of the bio-resin at that location. This results either in incomplete curing of the bio-resin at the second face or in an unacceptably long curing time for the material. Without wishing to be bound by theory, the present inventors therefore consider that promoting curing of the bio-resin at the second face at a lower temperature and/or at a faster rate than the bio-resin at the first face can lead to significantly improved properties of the cured panel.

References in this disclosure to the second bio-resin cures faster and/or at a lower temperature than the first bio-resin relate to analysis of the respective bio-resins under identical conditions when subjected to heating up to their respective curing temperatures at the same rate of heating. It will be understood that the behaviour of the first and second bio-resins in situ in the composite depends heavily on the thermal gradient across the composite. However, in situ during the process of the present invention, it is preferred that the second bio-resin is cured before the first bio-resin is completely cured. Moisture management may also be important during the curing process. Curing of the bio-resin typically takes place via condensation reactions and therefore releases water vapour. Since the second core layer of the structure may be formed of paper or card, release of large quantities of water vapour into the core can cause unacceptable reductions in strength of the composite. Furthermore, it is considered that if the bio-resin at the first face of the natural fibre mat is allowed to cure before the bio-resin at the second face, then moisture generated during curing of the second face may become trapped in the second core layer, leading to weakening of the second core layer. Again, the inventors make these observations without wishing to be bound by theory.

During the curing step, preferably steam release means are provided. The curing step typically takes place in a heated moulding press. Known moulding presses are known for moulding polyurethane-containing products. Such moulding presses are typically operated in a carefully sealed condition, in view of the health and safety issues surrounding the curing of polyurethane. However, for the materials of the present invention, it is preferred instead that a steam vent is provided. The steam vent may take the form of an additional process step, in which the mould press is opened (at least partially) during the curing step in order to release steam that has been generated during the heating and curing of the material. In that case, the mould press is typically then closed again to complete the curing of the material. The steam vent may take place at 1 minute or less from the closure of the moulding press, more preferably at 45 seconds or less from the closure of the moulding press. Additionally or alternatively, the steam vent may take the form of a gap provided in the mould press throughout the curing step, the gap being placed so as to provide a suitable exit route for steam generated during the heating and curing of the material. The steam vent can also be achieved by the use of holes (e.g. drilled holes) in the tool face, providing a steam exit route out of the tool.

It is possible to consider the cycle time of the manufacture of a composite material according to the present invention. The cycle time is considered to be the time between corresponding steps in the manufacture of a first composite material and a subsequent composite material in the same moulding apparatus. Preferably, the cycle time here is 150 seconds or less. More preferably, the cycle time is 120 seconds or less, e.g. about 100 seconds. For large panels, however, the cycle times may be longer, e.g. up to 240 seconds.

Preferably, the viscosity of the first bio-resin at room temperature is lower than that of the second bio-resin under the same conditions. This allows the first bio-resin to penetrate more deeply into the natural fibre mat. The second bio-resin in contrast penetrates less deeply and so is available for providing a secure bond between the core and the skin layer. In order to provide this difference in viscosity, the first and second bio-resins, at the time of application to the natural fibre mat, may differ in water content. It is preferred that the first bio-resin has a higher water content than the second bio-resin. In view of this higher water content, the partially impregnated natural fibre mat may be subjected to a drying step after application of the first bio-resin and before the application of the second bio-resin. The water content of the second bio-resin is preferably 10wt% or less. The water content of the first bio-resin (after an optional drying step of the impregnated mat) is preferably 10wt% or less. However, the water content of the first bio-resin at the time of impregnation into the first face of the natural fibre mat may be higher than 10wt%, e.g. 15wt% or higher, or 20wt% or higher.

The first bio-resin preferably also includes a mould-release agent. This is preferred in order to assist in release of the cured panel from a corresponding mould, on the assumption that the first bio-resin may pass through the skin layer to some extent. Preferably, the second bio-resin does not include a mould-release agent, since it is not needed at the interface between the second core layer and the first and/or third core layer. Inclusion of a mould-release agent in the second bio-resin would likely have the effect of deleteriously reducing the strength of the panel.

The first bio-resin preferably also includes a filler component. The filler component can provide greater structural integrity to the free faces of the panel after curing. The filler is preferably a particulate filler. The average particle size of the filler may be less than 100µm, e.g. about 30µm. The first bio-resin may include up to about 30wt% filler, more preferably up to about 20wt% filler.

Preferably, different amounts by weight of bio-resin are applied to the first and second faces of the natural fibre mat. Typically, more bio-resin is applied to the first face than to the second face. For example, 1.5-3 times by weight the amount of bio-resin may be applied to the first face than to the second face. Typically, the bio-resin may be applied to the second face in an amount of 100-200gm⁻². Typically, the bio-resin may be applied to the first face in an amount of 200-500gm⁻².

In some embodiments, it is preferred for the fibre mats to be fully impregnated with the first resin prior to the drying step.

The basis weight of the natural fibre mat is preferably in the range 400-800gm⁻².

In the manufacturing process, a pressure difference may be applied across the impregnated natural fibre mats, so that there is a higher pressure in the core region compared with the A-face of the natural fibre mats. This may be achieved by applying a vacuum in the mould to pull the A-face of the natural fibre mats into contact with the mould. Additionally or alternatively pressurised gas (e.g. compressed air) may be injected into the region between the B-faces of the natural fibre mats. This pressure difference assists in forcing the natural fibre mats into contact with the mould.

The present inventors have found that an additional improvement is possible by additional processing of the first skin layer and the first core layer. The same approach is preferably applicable to the second skin layer and the third core layer, when present.

The first skin layer and the first core layer are processed by at least partially consolidating the first skin layer and the first core layer. This is achieved by driving natural fibres of the first core layer into the first skin layer. Additionally or alternatively this may be achieved by driving inorganic fibres of the first skin layer into the first core layer. The driven fibres may be driven partly or fully through the opposing layer.

The process for achieving the at least partial consolidation of the first skin layer and the first core layer includes the step of needle punching the first skin layer and the first core layer together.
In the case where the natural fibres of the first core layer are driven into the first skin layer, preferably at least 1% of the fibres in the first core layer are driven at least halfway through the first skin layer. More preferably at least 2% or at least 5% of the fibres in the first core layer are driven at least halfway through the first skin layer. Preferably at most 20% or at most 15% of the fibres in the first core layer are driven at least halfway through the first skin layer. It has been found that when about 10% of the fibres in the first core layer are driven at least halfway through the first skin layer, a suitable consolidation of the first skin layer and the first core layer is achieved,

Preferably the needle punching is operated at an area concentration of at least 50 strokes per cm². More preferably, the needle punching is operated at an area concentration of at least 100 strokes per cm². This allows a suitable proportion of the fibres of one layer to be driven into the opposing layer.

Preferably, the at least partial consolidation of the first skin layer and the first core layer takes place before impregnation with the resin-based binder component. It is found that suitable consolidation of the layers makes the resultant composite layer significantly easier to handle. Additionally, the use of needle punching leaves some legacy holes in the composite layer. These can be advantageous because they allow excess resin to be more easily expelled following the resin impregnation step.
The at least partial consolidation of the first skin layer and the first core layer is also found to improve the mechanical performance of the subsequent laminated composite material.

Preferably, the composite fibre-based material is at least partially impregnated with a resin-based binder component. Such a material can be used as a prepreg material, in a similar manner to the materials disclosed in WO 2012/056202.

### BRIEF DESCRIPTION OF THE DRAWINGS

Embodiments of the invention will now be described by way of example with reference to the accompanying drawings in which:
Fig. 1 shows the manufacturing process used to produce a composite load bearing panel, as described in WO 2012/056202, described above.
Fig. 2 shows the fully assembled panel of WO 2012/056202, described above.
Fig. 3a shows a cross section of a laminated composite material according to a first embodiment of the present invention.
Fig. 3b shows the manufacturing process used to produce a laminated composite material according to a first embodiment of the present invention.
Fig. 4a shows a cross section of a laminated composite material according to a second embodiment of the present invention.
Fig. 4b shows the manufacturing process used to produce a laminated composite material according to a second embodiment of the present invention.
Fig. 5a shows a cross section of a laminated composite material according to a third embodiment of the present invention.
Fig. 5b shows the manufacturing process used to produce a laminated composite material according to a third embodiment of the present invention.
Fig. 6 shows a schematic cross section of a laminated composite according to an embodiment of the present invention and an enlarged view showing the compression of the natural fibre layer where the honeycomb core walls meet the natural fibre layer.
Fig. 7 shows a micrograph of a cross section of an embodiment of the present invention.

### DETAILED DESCRIPTION OF THE PREFERRED EMBODIMENTS, AND FURTHER OPTIONAL FEATURES OF THE INVENTION

Continuous mineral fibre such as basalt fibre is manufactured without boron or fluorine and the stage of batch preparation is absent. Therefore, its production needs a smaller furnace than glass fibre and creates no environmental pollutants. Physical-chemical properties of continuous mineral fibres compared to standard glass fibres show an evident advantage especially regarding thermal resistance and mechanical strength. They also have a decisive advantage over more expensive fibres (E-, S-glass fibres, carbon and kevlar fibres) as far as usable temperature is concerned as they have a usable temperature of 650°C compared with 500°C for carbon and less than 350°C for the others.

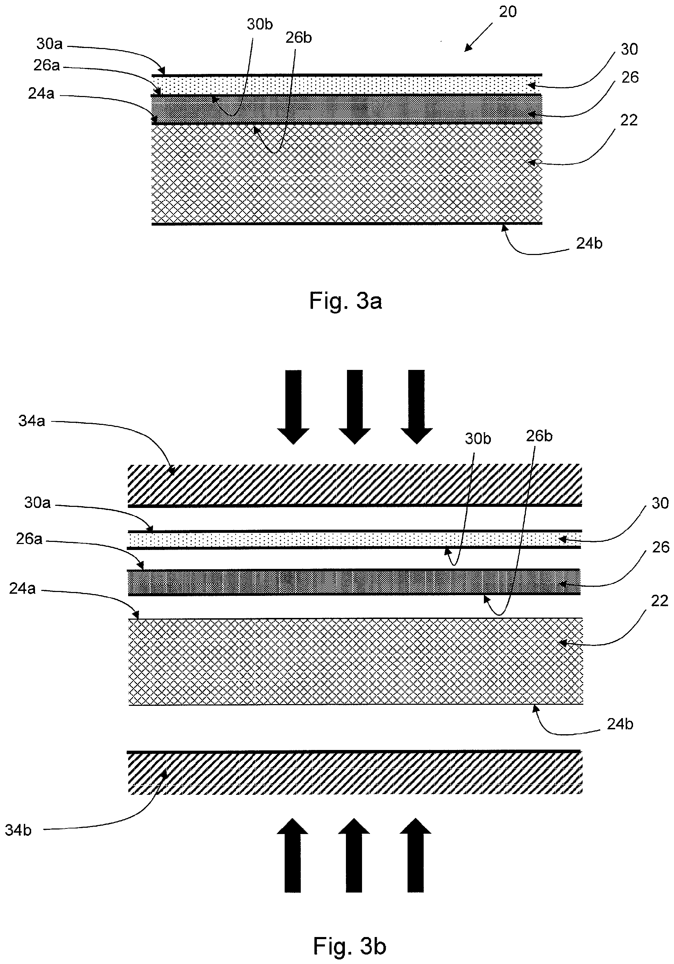

Fig. 3a and Fig. 3b show, respectively, a schematic cross sectional view of the final assembled version of a laminated composite material 20, and a representation of the manufacturing process, according to a first embodiment of the present invention. Layered composite structure 20 has second core layer (low density) 22, first core layer 26, and first skin layer 30. The second core layer 22 has an upper surface 24a and a lower surface 24b. Similarly, first core layer 26 has an upper surface 26a and a lower surface 26b and first skin layer 30 has an upper surface 30a and a lower surface 30b.
First core layer 26 consists of a fibrous material and a resin-based binder component (not shown). First skin layer 30 consists of an inorganic fibre fabric.
When assembled, as in Fig. 3a, the lower surface 30b of the first skin layer 30 is in contact with and bonded to the upper surface 26a of the first core layer 26, and the lower surface 26b of the first core layer 26 is in contact with and bonded to the upper surface 24a of the second core layer 22.

In order to manufacture a layered composite structure 20 according to the first embodiment of the present invention, a stack is formed, of the first skin layer 30, a resin-impregnated fibre mat 26 and the second core layer 22. During manufacture, the resin component is wet, and there is wet resin exposed on the upper surface 26a and lower surface 26b of the first core layer 26. Once the stack is assembled, top pressing surface 34a and bottom pressing surface 34b of a forming tool move towards each other (indicated by the large solid arrows), pressing the components of the stack together, and simultaneously, the stack is heated. The heating cures the resin which bonds the components together.

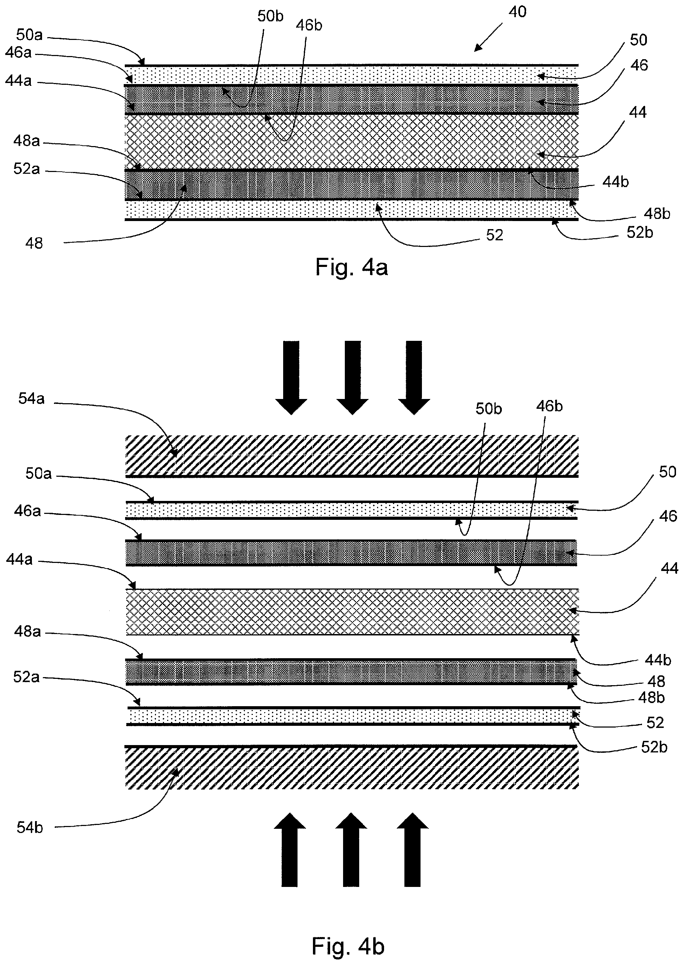

Fig. 4a and Fig. 4b show, respectively, a cross sectional view of the final assembled version of a laminated composite material 40 and a schematic view of the manufacturing process for it, according to a second embodiment of the present invention. This is similar to the first embodiment, except that here there is explicitly provided a second skin layer and a third core layer in order to sandwich the low density second core layer.

In Fig. 4a, laminated composite material 40 is composed of five main layers. These are bottom skin layer (second skin layer) 52, bottom core layer (third core layer) 48, cellular core (second core layer) 44, top core layer (first core layer) 46, and top skin layer (first skin layer) 50.

The cellular core 44 has upper surface 44a and lower surface 44b. Similarly, the top core layer 46 has upper surface 46a and lower surface 46b. The bottom core layer 48 has upper surface 48a and lower surface 48b. The top skin layer 50 has upper surface 50a and lower surface 50b. The bottom skin layer 52 has upper surface 52a and lower surface 52b.

The top and bottom core layers 46, 48 each consist of a fibrous material and a resin-based binder component (not shown). The top and bottom skin layers 50, 52 consist of woven mineral fibre fabric.

When assembled, as in Fig. 4a, the lower surface 50b of the top skin layer 50 is in contact with the upper surface 46a of the top core layer 46, and the lower surface 46b of the top core layer 46 is in contact with the upper surface of the cellular core 44a. Also, the upper surface 52a of the bottom skin layer 52 is in contact with the lower surface 48b of the bottom core layer 48b and the upper surface 48a of the bottom core layer 48 is in contact with the lower surface 44b of the cellular core 44.

In order to manufacture a laminated composite material according to the second embodiment of the present invention, a stack is formed, of the top skin layer 50, a first resin-impregnated fibre mat 46, the cellular core 44, a second resin-impregnated fibre mat 48 and the bottom skin layer 52.

During manufacture, the resin component of the top and bottom core layers 46, 48 is wet, and there is wet resin exposed on the upper surface 46a, 48a and lower surface 46b, 48b of the top and bottom core layers 46, 48. Once the stack is assembled, top pressing surface 54a and bottom pressing surface 54b of the forming tool move towards each other (indicated by the large solid arrows), pressing the components of the stack together and simultaneously the stack is heated. The heating cures the resin in the top core layer and the bottom core layer, which bonds the components together.
Known composite materials using a foaming-type adhesive provide useful but limited adhesion to the honeycomb walls of the low density cellular core. In the preferred embodiments of the present invention, by using a relatively lofty (i.e. low bulk density) natural fibre (preferably non-woven) mat, it is possible not only to lock in the honeycomb cells but also to add to the reinforcement of the composite panel using the strength of the natural fibres. In embodiments where the natural fibre mat is non-woven, the natural fibres tend to have free ends sticking out from the mat surface. These are pushed inside the cells of the low density core during moulding, assisting in the provision of this locking effect.

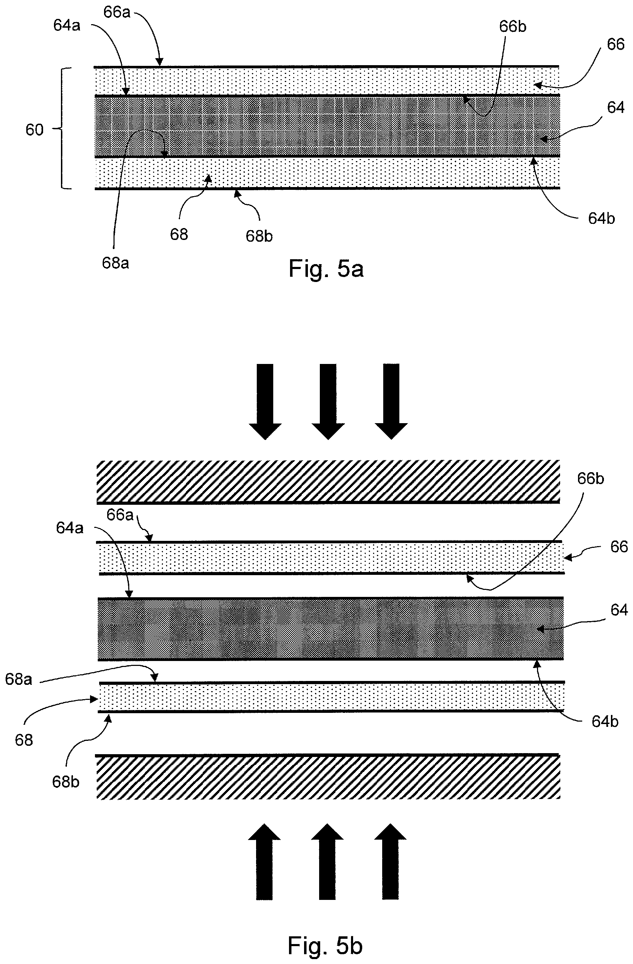

Figs. 5a and Fig. 5b show, respectively, a cross sectional view of the final assembled version of a laminated composite material 60 and a schematic view of the manufacturing process for it, not according to the present invention. In this embodiment, unlike the two previously described, there is no cellular core layer.
Laminated composite material 60 is composed of a natural fibre and resin core (first core layer) 64, a top skin layer (first skin layer) 66 formed of inorganic fibre and a bottom skin layer (second skin layer) 68 also formed of inorganic fibre.
The core layer 64 has an upper surface 64a and a lower surface 64b. Similarly, the top skin layer 66 has an upper surface 66a and a lower surface 66b. When assembled, as in Fig. 5a, the lower surface 66b of the top skin layer 66 is in contact with the upper surface 64a of the core layer 64. The lower surface 64b of the core layer 64 is in contact with the upper surface 68a of the bottom skin layer 68.

In order to manufacture a layered composite structure 60, a stack is formed, of the top skin layer 66, a natural fibre mat 64 impregnated with resin and the bottom skin layer 68. During manufacture, the resin component is wet, and there is wet resin exposed on the upper surface and lower surface of the resin-impregnated natural fibre mat. Once the stack is assembled, the top pressing surface and bottom pressing surface of the forming tool move towards each other (indicated by the large solid arrows), pressing the components of the stack together. The stack is heated, as with other embodiments, which cures the resin in the core layer 64, fixing its shape, and bonding the layers together - resulting in a laminated composite material as in Fig. 5a.

In effect, the embodiments of the present invention use nature fibre mats impregnated with resin as an adhesive system to bond mineral fibre sheets in a composite structure, in which a low density cellular core is used. This avoids the use of a separate adhesive film typically used in the construction of low density composite panels. Several advantages are explained in more detail below.

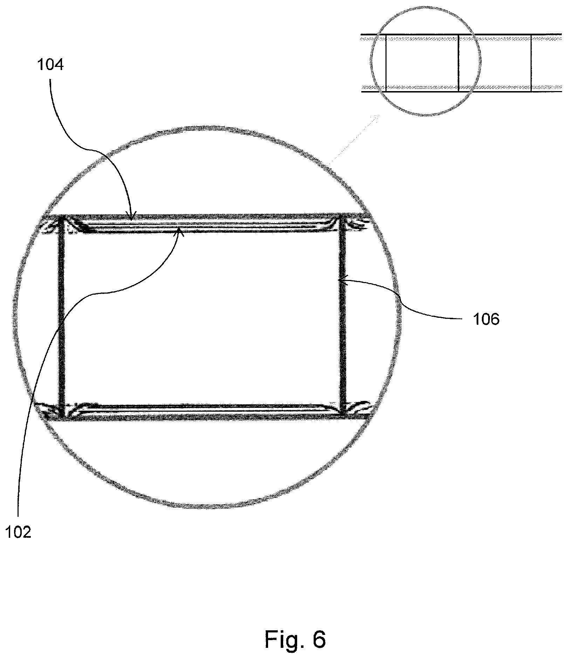

Fig. 6 shows a schematic cross section of a laminated composite according to an embodiment of the present invention. Also shown is an enlarged view. This shows the inorganic skin layer 104 laminated with the natural fibre and resin layer 102. During moulding, the structure is compressed. The honeycomb core walls 106, do not permanently deform. Instead, the walls 106 are pressed into the natural fibre mat. The result of this is as shown in Fig, 6, in which the honeycomb walls 106 are bonded securely to the resin-impregnated natural fibre mats due to the increase in bonding length provided by the pinching of the natural fibre mat between the honeycomb wall anf the inorganic fibre skin layer.
Typically, laminated composites using liquid resin systems take around 30 minutes to cure. In contrast, the preferred embodiments of the present invention use a resin which can be cured in about 40 s by itself and when in a sandwich construction in than 3 minutes. Known liquid resins are phenolic systems which are known for use in multilayer laminates. These for example may be applied at around 40°C then have to be held at 60°C during the gel phase. They are then de-moulded and finally post cured. This is complex and time-consuming process, especially when compared with the straightforward curing processes used in the preferred embodiments of the present invention.

The use of low cost materials if of interest to form useful laminated composite materials as efficiently as possible. Mineral fibres such as basalt fibres are of particular interest here, in view of their low cost and satisfactory mechanical properties. Such fibres are considerably cheaper than E-glass or carbon fibres.

The environmental sustainability of the materials used in the preferred embodiments is of great interest. The bio-resin and the natural fibres are clearly understood as having low environmental impact. Similarly, basalt fibres have low environmental impact, their main embodied energy being in the relatively high temperatures needed during fibre formation, but requiring no additives or additional processing.

In order to form the resin-impregnated natural fibre mat, a non-woven natural fibre mat is fully immersed in aqueous furan-based bio-resin and is then passed through rollers to remove excess liquid before optionally being passed through an oven to remove excess water. This drying stage is necessary in particular if the cellular core material is to be a paper or card core. This drying step can be omitted if the cellular core is foam, plastic or aramid.

The result of this process is a mat pre-impregnated with bio-resin in which every fibre is covered with resin.

Optionally the impregnated mat may be passed through a roller-coater so that additional concentrated bio-resin may be applied to one or both sides of the mat, as explained above in relation to A and B faces of the impregnated mat.

The mat is then either cut into panels or supplied in rolls.

Optionally the impregnated mat may be cured ore part-cured in an oven in uncompressed state before the additional concentrated bio-resin is applied in the roller-coater. This serves to rigidify the core in a less dense form before the mineral skins are applied, giving improved structural and acoustic performance for some applications. In this case the mat is supplied in panels.
In order to form the composite material, a single layer of this non-woven prepreg can be used with one or two layers of mineral fibres to form a simple panel having three layers. Alternatively a five layer structure can be formed in which two layers of resin-impregnated natural fibre mats and two layers of mineral fibres are disposed either side of a closed cell or honeycomb core. The mineral fibres can be basalt, as explained above.

Optionally the panel may be cured whilst the core is not completely compressed, effectively binding the two skins of mineral fibres together with a spacing (provided by the incompletely compressed natural fibre mat) that can be advantageous for structural and acoustic performance.
Optionally this spacing can be enhanced by pre-curing the impregnated natural fibre mat core before additional concentrated resin is applied in a roller coater. The mineral fibre skins are then positioned and bonded during a subsequent curing process.

When incorporating the low density cellular core, two layers of impregnated natural fibre mat are placed between the cellular core and the mineral fibre skin layers. This laminate is placed into a heated press. On heating and compression, the resin on the inside forms the bond to the core and the resin on the outside flows out through the mineral skins and binds the skins to the natural fibre layers.
The cycle time of this one-shot process is typically between 40 seconds and three minutes, considerably shorter than other resin systems and composites which require more layers and several curing phases.

In additional work, the present inventors have also found that further improvements can be secured by linking the basalt (inorganic) woven material to the flax (natural fibre) non-woven material in order to ease the process of loading prepreg panels into tools for forming. Additionally, it has been found that suitable approaches further improve the rigidity and peel strength of the finished composite panel.

The present inventors have found that by needle punching ("needling") the flax non-woven material onto the woven basalt to form a consolidated material, it is possible to substantially improve peel strength and flexural rigidity whilst also improving the impregnation of the resin into the consolidated material (and improving the expulsion of excess resin) and improving the ease of handling of the consolidation material for manoeuvre into the forming tool.

Two needling stations are provided. The first needles the air-laid and cross-lapped natural fibre to form a suitable natural fibre mat. Then the woven basalt is introduced into the line between the two needling stations so that the needles (typically running at 150 strokes/cm²) force a proportion of the flax fibres through the basalt. A suitable needling depth for the second needling station is about 13mm. The resulting material still has most of the flax on one side (to ultimately form the structural bond post impregnation on the B surface) but also has a significant quantity of flax on the other (the A surface). Between 1 and 10% of the natural fibre ends out "outside" the basalt and the consolidated material has good handleability.

After impregnation and curing, these flax fibres appear to form a stronger bond with the bio-resin and essentially mechanically "lock" the basalt into the structure.

The additional step of needling the flax and the basalt layers has several benefits:
- it "locks in" the basalt to the non-woven (and bio-resin), essentially mechanically linking the mineral fibres to the organic adhesive system.
- it simplifies the impregnation and panel-forming stages by combining the two layers (woven and non-woven) into one, consolidated layer
- the holes formed by the needles through the consolidated material facilitates the impregnation stage by making it easier for excess resin to be expelled after the full-bath immersion (and before the oven).

In terms of performance, the mechanical properties (rigidity and area weight) and fire performance are demonstrated in the following example of structural panels for use in an airline galley cart.

### EXAMPLES

In forming a composite panel suitable for an airline galley cart, the following materials were used:
First and third core layers in the form of sheets of 650 gsm carded and needle punched hemp fibres impregnated with an acid catalysed PFA resin as explained above. The acid catalyst is paratoluene sulphonic acid.

First and second skin layers of 350 gsm woven basalt fabric layers.

In a modified example, the first skin layer and the first core layer were needled to form a consolidated layer. Similarly the second skin layer and the third core layer were needled to form a consolidated layer.

A 250 gsm aramid core is used as the second core layer, having a thickness of about 5mm and cell diameter of about 3mm.

After pressing and heating at 180°C for 150 seconds to cure the bio resin, the resultant panel was rigid and had a thickness of 5.5 mm and an area weight of 2250 gsm.

The material (without needling) had a bending modulus of 9.0 GPa (as measured during a three-point bend). The material (with needling) had a bending modulus of 9.4 GPa (as measured during a three-point bend).

Testing for the aeronautical industry gives the following results:

**Table 1**

| **PROPERTY** | **TEST METHOD** | **Result (without needle punching woven basalt and natural fibre layers together)** | **Result (with needle punching woven basalt and natural fibre layers together)** |
|---|---|---|---|
| AREAL WEIGHT (kg/m²) | | 2.25 | 2.25 |
| THICKNESS (mm) | | 5.5 | 5.5 |
| LONG BEAM COMP (N) 4" LOAD, 10" SUPPORT (lb) | AMS STD 401 | 564 | 661 |
| LONG BEAM COMP (N) 10" LOAD, 20" SUPPORT (lb) | AMS STD 401 | 337 | 405 |
| SHORT BEAM SHEAR (N) TRANSVERSE (lb) | AMS STD 401 | 800 | 800 |
| SHORT BEAM SHEAR (N) LONGITUDINAL (lb) | AMS STD 401 | 1025 | 1025 |
| PEEL (N/76mm) TRANSVERSE | AMS STD 401 | 57 | 107 |
| PEEL (N/76mm) LONGITUDINAL | AMS STD 401 | 57 | 107 |
| CORE COMP. (N/mm²) | AMS STD 401 | 1.7 | 1.7 |
| BENDING MODULUS (GPa) | 3-POINT RIG | 9.0 | 9.4 |

| | | | |
|---|---|---|---|
| AMS STD 401 corresponds to Military Standard MIL-STD-401B "Sandwich constructions and core materials; general test methods" 1967, which incorporates ASTM 363. LONG BEAM COMP refers to strength testing in Long Beam Compression with a 24" x 3" specimen, 4 point load, 20" support span, 10" load span. SHORT BEAM SHEAR refers to strength testing in Short Beam Shear - 8" x 3" specimen, 3 pt. load, 4" support span, centre point loading. | | | |

Fire performance of the panel was tested. The panel was deemed to have excellent fire performance, and far better than expected. This is considered to be an additional, preferred benefit of some embodiments of the present invention. Key results relating to fire performance were:
Flammability: Burn length of 2.3 inches (compared with acceptable threshold of less than 6 inches).
Afterflame: no afterflame was observed at all (compared with acceptable threshold of 15 secs or less).
Drip exiting time: no drips were observed compared with acceptable threshold of being permitted after 3 seconds).
Heat release: Total heat release was 15.0 kWmin/m² (compared with acceptable threshold of up to 65 kWmin/m²).
Heat release: Peak heat release was 18.7 kW/m² (compared with acceptable threshold of up to 65 kW/m²).
Smoke emission: Ds Max in 4 min of 10.11 (compared with acceptable threshold of up to 200).

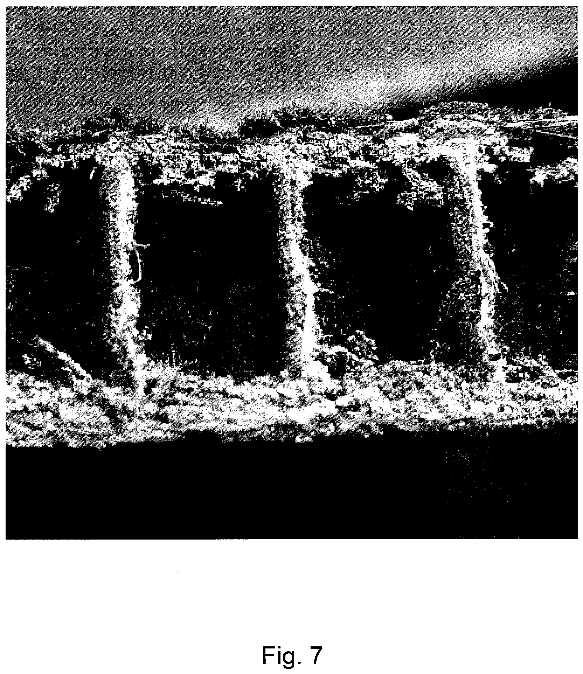

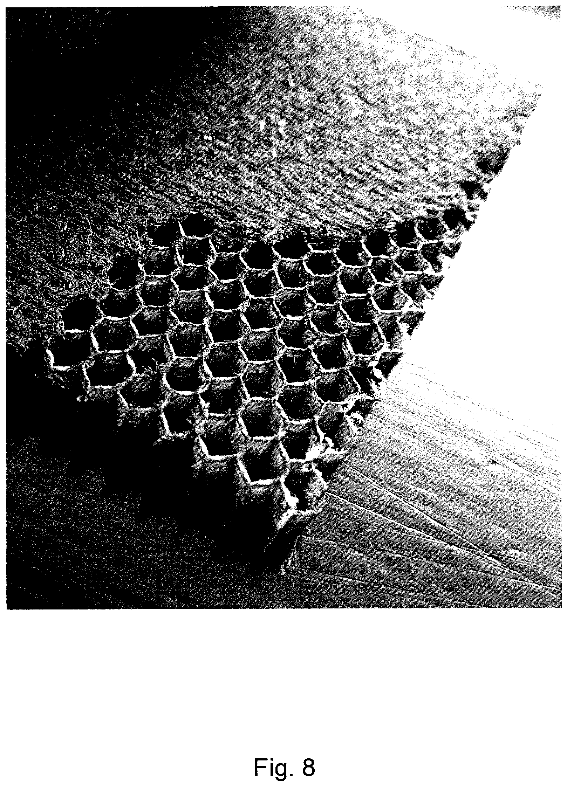

Fig. 7 shows a micrograph of a cross section of an embodiment of the present invention. Fig. 8 shows a view of an embodiment of the present invention in which the inorganic fibre skin layer and the natural fibre and resin first core layer have been peeled away to reveal the honeycomb core. These images show how the natural fibre mat carrying the resin is pushed into the cells of the honeycomb core. This provides a very good adhesion platform to ensure a firm bond between the inorganic fibre layer and the honeycomb core.

## Claims

1. A laminated composite material (20) having:
a. a first skin layer (30) comprising a network of inorganic fibres, said inorganic fibres being mineral fibres; and
b. a first core layer (26) comprising a network of natural fibres at least partially impregnated with a resin-based binder component,
c. a second core layer (22), with lower density than the first core layer,
wherein the natural fibres of the first core layer (26) are flax or hemp fibres, the first skin layer (30) is bonded to said first core layer (26) via the resin-based binder component and consolidated by needle punching the first core layer (30) and the first skin layer (26) together, and the second core layer (22) is bonded to the first core layer via the resin-based binder component at an opposing side to the first skin layer (30), thereby bonding the first skin layer (30) and the second core layer (22), said resin-based binder component being a renewable thermosetting resin chosen in the group consisting of epoxidized plant oil resins, cashew oil resins and furan-based resins, and said second core layer (22) being a cellular layer having a honeycomb structure, comprising a plurality of substantially parallel hollow channels, said cellular layer being made of a cellulosic material, such as paper or card, or of a synthetic material, such as aromatic polyamides (aramid or meta-aramid).

2. A laminated composite material according to claim 1 further comprising a third core layer (48) comprising a network of natural fibres at least partially impregnated with a resin-based binder component, said natural fibres of the third core layer (48) being flax or hemp, and a second skin layer (52) comprising a network of inorganic fibres, said inorganic fibres being mineral fibres, the third core layer (48) being bonded to the second core layer (22, 44) via the resin-based binder component at an opposing side to the first core layer (26, 46), and the second skin layer (52) being bonded to the third core layer (48) via the resin-based binder component at an opposing side to the second core layer (22, 44) and consolidated by needle punching the third core layer (48) and the second skin layer (52) together, said resin-based binder component being a renewable thermosetting resin chosen in the group consisting of epoxidized plant oil resins, cashew oil resins and furan-based resins.

3. A laminated composite material according to either claim 1 or claim 2 wherein the inorganic fibres of the first and/or second skin layer (30, 52) are in the form of woven fabric.

4. A laminated composite material according to any one of claims 1 to 3 wherein the inorganic fibres of the first and/or second skin layer (30, 52) are basalt fibres.

5. A laminated composite material according to any one of claims 1 to 4 wherein the composite material includes a fire retardant additive.

6. A laminated composite material according to any one of claims 1 to 5 wherein the resin-based binder component is a furan resin comprising a polyfurfuryl alcohol (PFA) polymer and includes paratoluene sulphonic acid as acid catalyst.

7. A laminated composite material according to any one of claims 1 to 6 wherein the first core layer (26) is a non-woven mat formed by needle punching, the area density of the natural fibre mat being in the range 300-3000 grams per square metre (gsm).

8. A laminated composite material according to claim 2 to 6 wherein it comprises a first core layer (46) and a third core layer (48) in the form of sheets of 650 gsm carded and needle punched hemp fibres impregnated with an acid catalysed PFA resin (furan resin comprising a polyfurfuryl alcohol), the acid catalyst being paratoluene sulphonic acid, said laminated composite material further comprises a first skin layer (50) and a second skin layer (52) in the form of 350 gsm woven basalt fabric layers, the first skin layer (50) and the first core layer (46) being needled together to form a consolidated layer, the second skin layer (52) and the third core layer (48) being needled together to form a consolidated layer, a 250 gsm aramid core being used as the second core layer (44), the latter having a thickness of about 5 mm and cell diameter of about 3 mm.

9. A method for manufacturing a laminated composite material (20), including the steps:
a. providing a first skin layer (30) comprising a network of inorganic fibres; said fibres being mineral fibres ;
b. providing a first core layer (26) comprising a network of natural fibres, said natural fibres being flax or hemp
c. consolidating by needle punching the first core layer (30) and the first skin layer (26) together;
d. at least partially impregnating the first core layer (26) with a resin-based binder component, the latter being a renewable thermosetting resin chosen in the group consisting of epoxidized plant oil resins, cashew oil resins and furan-based resins;
e. providing a second core layer (22), with lower density than the first core layer (26), said second core layer (22) being a cellular layer having a honeycomb structure, comprising a plurality of substantially parallel hollow channels, said cellular layer being made of a cellulosic material, such as paper or card, or of a synthetic material, such as aromatic polyamides (aramid or meta-aramid); and
f. pressing and heating the first skin layer (30), the first core layer (26), and the second core layer (22) to bond the first skin layer (30) to the first core layer (26) via the resin-based binder component, and to bond the second core layer (22) to the first core layer (26) via the resin-based binder component at an opposing side to the first skin layer (30).

10. A method according to claim 9 further including providing a third core layer (48) comprising a network of natural fibres consolidated together by needle punching with a second skin layer (52) and at least partially impregnated with a resin-based binder component, said natural fibres being hemp or flax, said second skin layer (52) comprising a network of inorganic fibres being mineral fibres, and in the pressing and heating step the third core (48) layer being bonded to the second core layer (22, 44) via the resin-based binder component at an opposing side to the first core layer (26, 46), and the second skin layer (52) being bonded to the third core layer (48) via the resin-based binder component at an opposing side to the second core layer (22,44), said resin-based binder component being a renewable thermosetting resin chosen in the group consisting of epoxidized plant oil resins, cashew oil resins and furan-based resins.

11. A method according to any one of claims 9 or 10 wherein the inorganic fibres of the first and/or second skin layer (30, 52) are in the form of woven fabric.

## Patentansprüche

1. Laminiertes Verbundmaterial (20), aufweisend:
a. eine erste Hautschicht (30), die ein Netzwerk von anorganischen Fasern umfasst, wobei die besagten anorganischen Fasern Mineralfasern sind; und
b. eine erste Kernschicht (26), die ein Netzwerk von Naturfasern umfasst, die zumindest teilweise mit einer Harz-basierten Bindemittelkomponente imprägniert sind,
c. eine zweite Kernschicht (22) mit einer geringeren Dichte als die erste Kernschicht,
wobei die Naturfasern der ersten Kernschicht (26) Flachs- oder Hanffasern sind, wobei die erste Hautschicht (30) über die Harz-basierte Bindemittelkomponente mit der ersten Kernschicht (26) verbunden und durch Vernadelung der ersten Kernschicht (30) und der zweiten Kernschicht (22) und die erste Hautschicht (26) zusammen konsolidiert wird, und die zweite Kernschicht (22) über die Harz-basierte Bindemittelkomponente auf der ersten Hautschicht (30) gegenüberliegenden Seite mit der ersten Kernschicht verbunden wird, wodurch die erste Hautschicht (30) und die zweite Kernschicht (22) verbunden werden, wobei die besagte Harz-basierte Bindemittelkomponente ein erneuerbares wärmehärtbares Harz ist, das aus der Gruppe ausgewählt ist, die aus epoxidierten Pflanzenölharzen, Cashewnussölharzen und Furan-basierten Harzen besteht, und die besagte zweite Kernschicht (22) eine Zellschicht ist, die eine Wabenstruktur aufweist, die mehrere im wesentlichen parallele Hohlkanäle umfasst, wobei die besagte Zellschicht aus einem Zellulosematerial, wie Papier oder Pappe, oder aus einem synthetischen Material, wie aromatischen Polyamiden (Aramid oder Meta-Aramid) besteht.

2. Laminiertes Verbundmaterial nach Anspruch 1, umfassend ferner eine dritte Kernschicht (48), die ein Netzwerk von Naturfasern umfasst, die zumindest teilweise mit einer Harz-basierten Bindemittelkomponente imprägniert sind, wobei die besagten Naturfasern der dritten Kernschicht (48) Flachs oder Hanf sind, und eine zweite Hautschicht (52), die ein Netzwerk von anorganischen Fasern umfasst, wobei die besagten anorganischen Fasern Mineralfasern sind, wobei die dritte Kernschicht (48) über die Harz-basierte Bindemittelkomponente auf einer der ersten Kernschicht (26, 46) gegenüberliegenden Seite mit der zweiten Kernschicht (22, 44) verbunden ist, und wobei die zweite Hautschicht (52) über die Harz-basierte Bindemittelkomponente auf einer der zweiten Kernschicht gegenüberliegenden Seite (22, 44) mit der dritten Kernschicht (48) verbunden und durch Vernadelung der dritten Kernschicht (48) und der zweiten Hautschicht (52) zusammen konsolidiert wird, wobei die besagte Harz-basierte Bindemittelkomponente ein erneuerbares wärmehärtbares Harz ist, das aus der Gruppe ausgewählt ist, die aus epoxidierten Pflanzenölharzen, Cashewnussölharzen, und Furan-basierten Harzen besteht.

3. Laminiertes Verbundmaterial nach Anspruch 1 oder Anspruch 2, bei dem die anorganischen Fasern der ersten und/oder zweiten Hautschicht (30, 52) in der Form eines Gewebes vorliegen.

4. Laminiertes Verbundmaterial nach irgendeinem der Ansprüche 1 bis 3, bei dem die anorganischen Fasern der ersten und/oder zweiten Hautschicht (30, 52) Basaltfasern sind.

5. Laminiertes Verbundmaterial nach irgendeinem der Ansprüche 1 bis 4, bei dem das Verbundmaterial einen feuerhemmenden Zusatzstoff umfasst.

6. Laminiertes Verbundmaterial nach irgendeinem der Ansprüche 1 bis 5, bei dem die Harz-basierte Bindemittelkomponente ein Furanharz ist, das ein Polyfurfurylalkohol (PFA)-Polymer umfasst, und Paratoluolsulfonsäure als Säurekatalysator umfasst.

7. Laminiertes Verbundmaterial nach irgendeinem der Ansprüche 1 bis 6, bei dem die erste Kernschicht (26) eine durch Vernadelung gebildete Vliesmatte ist, wobei die Flächendichte der Naturfasermatte im Bereich von 300 bis 3000 g pro Quadratmeter (g/m²) liegt.

8. Laminiertes Verbundmaterial nach Anspruch 2 bis 6, bei dem es eine erste Kernschicht (46) und eine dritte Kernschicht (48) in der Form von Blättern von mit säurekatalysiertem PFA-Harz (Polyfurfurylalkohol umfassendes Furanharz) imprägnierten, kardierten und vernadelten 650 g/m² Hanffasern umfasst, wobei der Säurekatalysator Paratoluolsulfonsäure ist, das laminierte Verbundmaterial ferner eine erste Hautschicht (50) und eine zweite Hautschicht (52) in der Form von 350 g/m² gewebten Basaltgewebeschichten umfasst, wobei die erste Hautschicht (50) und die erste Kernschicht (46) zusammen vernadelt sind, um eine konsolidierte Schicht zu bilden, wobei die zweite Hautschicht (52) und die dritte Kernschicht (48) zusammen vernadelt sind, um eine konsolidierte Schicht zu bilden, wobei ein 250 g/m² Aramidkern als zweite Kernschicht (44) verwendet wird, wobei Letzterer eine Dicke von etwa 5 mm und einen Zellendurchmesser von etwa 3 mm aufweist.

9. Verfahren zur Herstellung eines laminierten Verbundmaterials (20), umfassend folgende Schritte:
a. Bereitstellen einer ersten Hautschicht (30), die ein Netzwerk von anorganischen Fasern umfasst, wobei die besagten anorganischen Fasern Mineralfasern sind;
b. Bereitstellen einer ersten Kernschicht (26), die ein Netzwerk von Naturfasern umfasst, wobei die Naturfasern Flachs oder Hanf sind;
c. Konsolidieren durch Vernadelung der ersten Kernschicht (30) und der ersten Hautschicht (26) zusammen;
d. zumindest teilweise Imprägnieren der ersten Kernschicht (26) mit einer Harz-basierten Bindemittelkomponente, wobei Letztere ein erneuerbares wärmehärtbares Harz ist, das aus der Gruppe ausgewählt ist, die aus epoxidierten Pflanzenölharzen, Cashewnussölharzen und Furan-basierten Harzen besteht;
e. Bereitstellen einer zweiten Kernschicht (22) mit einer geringeren Dichte als die erste Kernschicht (26), wobei die besagte zweite Kernschicht (22) eine Zellschicht ist, die eine Wabenstruktur aufweist, die mehrere im wesentlichen parallele Hohlkanäle umfasst, wobei die besagte Zellschicht aus einem Zellulosematerial, wie Papier oder Pappe, oder aus einem synthetischen Material, wie aromatischen Polyamiden (Aramid oder Meta-Aramid) besteht; und
f. Pressen und Erhitzen der ersten Hautschicht (30), der ersten Kernschicht (26) und der zweiten Kernschicht (22), um die erste Hautschicht (30) über die Harz-basierte Bindemittelkomponente mit der ersten Kernschicht (26) zu verbinden, und die zweite Kernschicht (22) auf einer der ersten Hautschicht (30) gegenüberliegenden Seite über die Harz-basierte Bindemittelkomponente mit der ersten Kernschicht (26) zu verbinden.

10. Verfahren nach Anspruch 9, umfassend ferner das Bereitstellen einer dritten Kernschicht (48), die ein Netzwerk von Naturfasern umfasst, die durch Vernadelung zusammen mit einer zweiten Hautschicht (52) konsolidiert und zumindest teilweise mit einer Harz-basierten Bindemittelkomponente imprägniert sind, wobei die besagten natürlichen Fasern Hanf oder Flachs sind, wobei die zweite Hautschicht (52) ein Netzwerk von anorganischen Fasern umfasst, die Mineralfasern sind, und wobei die dritte Kernschicht (48) während dem Press- und Heizschritt über die Harz-basierte Bindemittelkomponente auf einer der ersten Kernschicht (26, 46) gegenüberliegenden Seite mit der zweiten Kernschicht (22, 44) verbunden wird, und wobei die zweite Hautschicht (52) über die Harz-basierte Bindemittelkomponente auf einer der zweiten Kernschicht (22, 44) gegenüberliegenden Seite mit der dritten Kernschicht (48) verbunden wird, wobei die besagte Harz-basierte Bindemittelkomponente ein erneuerbares wärmehärtbares Harz ist, das aus der Gruppe ausgewählt ist, die aus epoxidierten Pflanzenölharzen, Cashewnussölharzen und Furan-basierten Harzen besteht.

11. Verfahren nach irgendeinem der Ansprüche 9 oder 10, bei dem die anorganischen Fasern der ersten und/oder zweiten Hautschicht (30, 52) in der Form eines Gewebes vorliegen.

## Revendications

1. Matériau composite stratifié (20) présentant:
a. une première couche de peau (30) comprenant un réseau de fibres inorganiques, lesdites fibres inorganiques étant des fibres minérales; et
b. une première couche de noyau (26) comprenant un réseau de fibres naturelles au moins partiellement imprégnées d'un composant liant à base de résine,
c. une deuxième couche de noyau (22), de densité inférieure à la première couche de noyau,
dans lequel les fibres naturelles de la première couche de noyau (26) sont des fibres de lin ou de chanvre, la première couche de peau (30) est assemblée à ladite première couche de noyau (26) par le composant liant à base de résine et consolidée par aiguilletage de la première couche de noyau (30) et de la première couche de peau (26) entre elles, et la deuxième couche de noyau (22) est assemblée à la première couche de noyau par le composant liant à base de résine d'un côté opposé à la première couche de peau (30), assemblant ainsi la première couche de peau (30) et la deuxième couche de noyau (22), ledit composant liant à base de résine étant une résine thermodurcissable renouvelable choisie dans le groupe constitué de résines d'huile végétale époxydée, de résines d'huile de cajou et de résines à base de furane, et ladite deuxième couche de noyau (22) étant une couche cellulaire présentant une structure en nid d'abeilles, comprenant une pluralité de canaux creux sensiblement parallèles, ladite couche cellulaire étant réalisée en un matériau cellulosique, tel que du papier ou du carton, ou d'un matériau synthétique, tel que des polyamides aromatiques (aramide ou méta-aramide).

2. Matériau composite stratifié selon la revendication 1, comprenant par ailleurs une troisième couche de noyau (48) comprenant un réseau de fibres naturelles au moins partiellement imprégnées d'un composant liant à base de résine, lesdites fibres naturelles de la troisième couche de noyau (48) étant du lin ou du chanvre, et une deuxième couche de peau (52) comprenant un réseau de fibres inorganiques, lesdites fibres inorganiques étant des fibres minérales, la troisième couche de noyau (48) étant assemblée à la deuxième couche de noyau (22, 44) par le composant liant à base de résine d'un côté opposé à la première couche de noyau (26, 46), et la deuxième couche de peau (52) étant assemblée à la troisième couche de noyau (48) par le composant liant à base de résine d'un côté opposé à la deuxième couche de noyau (22, 44) et consolidée par aiguilletage de la troisième couche de noyau (48) et de la deuxième couche de peau (52) entre elles, ledit composant liant à base de résine étant une résine thermodurcissable renouvelable choisie dans le groupe constitué de résines d'huile végétale époxydées, de résines d'huile de cajou et de résines à base de furane.

3. Matériau composite stratifié selon la revendication 1 ou la revendication 2, dans lequel les fibres inorganiques de la première et/ou de la deuxième couche de peau (30, 52) se présentent sous forme d'un tissu tissé.

4. Matériau composite stratifié selon l'une quelconque des revendications 1 à 3, dans lequel les fibres inorganiques de la première et/ou de la deuxième couche de peau (30, 52) sont des fibres de basalte.

5. Matériau composite stratifié selon l'une quelconque des revendications 1 à 4, dans lequel le matériau composite comprend un additif ignifuge.

6. Matériau composite stratifié selon l'une quelconque des revendications 1 à 5, dans lequel le composant liant à base de résine est une résine de furane comprenant un polymère d'alcool polyfurfurylique (PFA) et comprend de l'acide paratoluènesulfonique comme catalyseur acide.

7. Matériau composite stratifié selon l'une quelconque des revendications 1 à 6, dans lequel la première couche de noyau (26) est un mat non tissé formé par aiguilletage, la densité surfacique du mat de fibres naturelles étant comprise dans la plage de 300 à 3000 grammes par mètre carré (g/m²).

8. Matériau composite stratifié selon les revendications 2 à 6, dans lequel il comprend une première couche de noyau (46) et une troisième couche de noyau (48) sous forme de feuilles de fibres de chanvre cardées et aiguilletées de 650 g/m² imprégnées d'une résine PFA catalysée par un acide (résine de furane comprenant un alcool polyfurfurylique), le catalyseur acide étant de l'acide paratoluènesulfonique, ledit matériau composite stratifié comprend par ailleurs une première couche de peau (50) et une deuxième couche de peau (52) sous forme de couches de tissu de basalte tissé de 350 g/m², la première couche de peau (50) et la première la couche de noyau (46) étant aiguilletées entre elles pour former une couche consolidée, la deuxième couche de peau (52) et la troisième couche de noyau (48) étant aiguilletées entre elles pour former une couche consolidée, un noyau d'aramide de 250 g/m² étant utilisé comme deuxième couche de noyau (44), ce dernier présentant une épaisseur d'environ 5 mm et un diamètre d'alvéole d'environ 3 mm.

9. Procédé de fabrication d'un matériau composite stratifié (20), comportant les étapes suivantes:
a. prévoir une première couche de peau (30) comprenant un réseau de fibres inorganiques; lesdites fibres étant des fibres minérales;
b. prévoir une première couche de noyau (26) comprenant un réseau de fibres naturelles, lesdites fibres naturelles étant du lin ou du chanvre;
c. consolider par aiguilletage la première couche de noyau (30) et la première couche de peau (26) entre elles;
d. imprégner au moins partiellement la première couche de noyau (26) d'un composant liant à base de résine, ce dernier étant une résine thermodurcissable renouvelable choisie dans le groupe constitué de résines d'huile végétale époxydées, de résines d'huile de cajou et de résines à base de furane;
e. prévoir une deuxième couche de noyau (22), de densité inférieure à la première couche de noyau (26), ladite deuxième couche de noyau (22) étant une couche cellulaire présentant une structure en nid d'abeilles, comprenant une pluralité de canaux creux sensiblement parallèles, ladite couche cellulaire étant réalisée en un matériau cellulosique, tel que du papier ou du carton, ou en un matériau synthétique, tel que des polyamides aromatiques (aramide ou méta-aramide); et
f. presser et chauffer la première couche de peau (30), la première couche de noyau (26), et la deuxième couche de noyau (22) pour assembler la première couche de peau (30) à la première couche de noyau (26) par le composant liant à base de résine, et pour assembler la deuxième couche de noyau (22) à la première couche de noyau (26) par le composant liant à base de résine d'un côté opposé à la première couche de peau (30).

10. Procédé selon la revendication 9, comportant par ailleurs le fait de prévoir une troisième couche de noyau (48) comprenant un réseau de fibres naturelles consolidées entre elles par aiguilletage avec une deuxième couche de peau (52) et imprégnées au moins partiellement d'un composant liant à base de résine, lesdites fibres naturelles étant du chanvre ou du lin, ladite deuxième couche de peau (52) comprenant un réseau de fibres inorganiques qui sont des fibres minérales, et, au cours de l'étape de pressage et de chauffage, la troisième couche de noyau (48) étant assemblée à la deuxième couche de noyau (22, 44) par le composant liant à base de résine d'un côté opposé à la première couche de noyau (26, 46), et la deuxième couche de peau (52) étant assemblée à la troisième couche de noyau (48) par le composant liant à base de résine d'un côté opposé à la deuxième couche de noyau (22, 44), ledit composant liant à base de résine étant une résine thermodurcissable renouvelable choisie dans le groupe constitué de résines d'huile végétale époxydées, de résines d'huile de cajou et de résines à base de furane.

11. Procédé selon l'une quelconque des revendications 9 ou 10, dans lequel les fibres inorganiques de la première et/ou de la deuxième couche de peau (30, 52) se présentent sous forme de tissu tissé.
